# EUROPÄISCHE PATENTSCHRIFT

(11) **EP 3 252 359 B1**
(45) Veröffentlichungstag und Bekanntmachung des Hinweises auf die Patenterteilung: **19.12.2018**
(21) Anmeldenummer: 17168448.3
(22) Anmeldetag: 27.04.2017
(51) Int. Cl.: F16K 11/085

(54) **DREHSCHIEBERVENTIL**
ROTARY NOZZLE VALVE
SOUPAPE À TIROIR ROTATIF

(30) Priorität: 03.06.2016 DE 102016110318
(43) Veröffentlichungstag der Anmeldung: 06.12.2017
(73) Patentinhaber: Pierburg GmbH, 41460 Neuss (DE)
(72) Erfinder: BADEN, Matthias, 40237 Düsseldorf (DE); KÖSTER, Andreas, 45149 Essen (DE); KREBBER-HORTMANN, Karl, 40221 Düsseldorf (DE)
(74) Vertreter: Patentanwälte ter Smitten Eberlein-Van Hoof Rütten Partnerschaftsgesellschaft mbB

(56) Entgegenhaltungen:
- WO-A1-2016/045895
- DE-T2- 60 209 019
- FR-A1- 2 844 571

## Beschreibung

Die vorliegende Erfindung betrifft einen Kühlmittelkreislauf einer Verbrennungskraftmaschine mit einem Drehschieberventil, welches ein Gehäuse, mit einem ersten Einlass, welcher fluidisch mit einem Kühlmittelmantel des Motorblockes der Verbrennungskraftmaschine verbindbar ist, einem zweiten Einlass, welcher fluidisch mit einem Kühlmittelmantel des Zylinderkopfes der Verbrennungskraftmaschine verbindbar ist, einem ersten Auslass, welcher fluidisch mit einem Kühlerkreislauf verbindbar ist, und einem zweiten Auslass, welcher fluidisch mit einem Bypasskreislauf verbindbar ist, umfasst. Das Drehschieberventil umfasst ferner ein Drehschieberglied, welches wenigstens vier Drehschieberöffnungen aufweist, wobei eine Durchflussmenge des Kühlmittels des ersten Einlasses, des ersten Auslasses und des zweiten Auslasses durch Drehen des Drehschiebergliedes regelbar sind.
Drehschieberventile der eingangs genannten Art sind aus dem Stand der Technik bekannt (s. z.B. WO2016/045895A1) und werden beispielsweise zur Durchsatzregelung von Kühlmittelkreisläufen verwendet. Diese Drehschieberventile weisen zum Einstellen eines flüssigen oder gasförmigen Volumenstroms in der Mantelfläche eines jeden Drehschiebergliedes mindestens eine Drehschieberöffnung auf, die je nach Drehwinkelstellung des Drehschiebergliedes mit einem Einlassstutzen und/oder einem Auslassstutzen für das Medium zusammenwirken können. Je nach Winkelstellung wird dabei ein Durchströmungsquerschnitt durch Überschneidung der jeweiligen Drehschieberöffnung mit dem Einlassstutzen oder Auslassstutzen eingestellt.

Aus der DE 20 2015 100 582 U1 ist ein Drehschieberventil für einen Kühlmittelkreislauf einer Verbrennungskraftmaschine bekannt. Dieses Drehschieberventil umfasst ein angetriebenes Drehschieberglied, welches drehbar in einem Gehäuse angeordnet ist. Das Gehäuse weist Auslässe und Einlässe auf, durch welche das Kühlmittel strömt. Das Drehschieberglied weist an einer Außenumfangsfläche mehrere Öffnungen auf, welche durch Drehen des Drehschiebergliedes mit den Auslässen des Gehäuses in Überdeckung kommen, so dass eine Kühlmittelströmung ermöglicht wird.

Bei dem Drehschieberventil nach dem Stand der Technik ist eine Regelung der Kühlmittelströmung des Motorblockes nur zusammen mit einer Regelung einer Bypassströmung und/oder einer Kühlerströmung möglich. Durch die vielen veränderlichen Parameter während der Regelung wird eine Regelung der Temperatur des Motorblockes erschwert.

Die Aufgabe der vorliegenden Erfindung liegt darin, einen Kühlmittelkreislauf einer Verbrennungskraftmaschine mit einem Drehschieberventil zu schaffen, mit welchem eine Kühlmittelströmung des Motorblockes bezüglich Menge und Temperatur unabhängig regelbar ist.

Diese Aufgabe wird durch einen Kühlmittelkreislauf einer Verbrennungskraftmaschine mit einem Drehschieberventil mit den Merkmalen des Anspruchs 1 gelöst.

Der erfindungsgemäße Kühlmittelkreislauf einer Verbrennungskraftmaschine mit einem Drehschieberventil weist wenigstens zwei Umfangsabschnitte auf, die jeweils in zwei Teilumfangsabschnitte unterteilt sind. Unter einem Umfangsabschnitt im Sinne der vorliegenden Erfindung wird ein zusammenhängender Abschnitt entlang des Umfangs des Drehschiebergliedes verstanden.

Dieser Umfangsabschnitt ist nochmals in zwei Teilumfänge, nämlich die Teilumfangsabschnitte unterteilt. Diese Teilumfangsabschnitte sind vorzugsweise gleich groß, können aber auch unterschiedlich groß sein. In jedem dieser Umfangsabschnitte ist ein Öffnungsquerschnitt einer ersten Drehschieberöffnung für den ersten Auslass und ein dazu axial versetzter Öffnungsquerschnitt einer zweiten Drehschieberöffnung für den zweiten Auslass über die zwei Teilumfangsabschnitte gleich. Als Öffnungsquerschnitt wird dabei die durch den Auslass bzw. Einlass freigegebene Fläche der Drehschieberöffnung verstanden. Dieser Öffnungsquerschnitt kann jedoch auch Null sein, wenn keine Fläche der Öffnung freigegeben ist. Der Öffnungsquerschnitt der ersten und zweiten Drehschieberöffnung ändert sich somit nicht über den Umfangsabschnitt. In jeweils einem der Teilumfangsabschnitte jedes dieser Umfangsabschnitte ist eine zu der ersten und der zweiten Drehschieberöffnung axial versetzte dritte Drehschieberöffnung für den ersten Einlass angeordnet, während der jeweils andere dem ersten Einlass zugeordnet Teilumfangsabschnitt des Drehschiebergliedes geschlossen ist. In jedem Umfangsabschnitt ändert sich zudem ein Öffnungsquerschnitt der ersten und zweiten Drehschieberöffnung nicht, so dass durch teilweises Öffnen oder Schließen eine Regelung des ersten Einlasses, welcher fluidisch mit dem Motorblock verbunden ist, möglich ist. Die Kühlmittelströmung des Motorblockes kann somit in jedem Umfangsabschnitt unabhängig von dem ersten und dem zweiten Auslass geregelt werden. Dadurch wird eine Temperaturregelung des Motorblockes vereinfacht.

In einer bevorzugten Ausführungsform der Erfindung sind die Teilumfangsabschnitte gleich oder unterschiedlich groß, wobei ein Durchmesser des ersten Einlasses am Gehäuse bei gleich großen Teilumfangsabschnitten kleiner oder gleich dem Teilumfangsabschnitt ist, und wobei der Durchmesser bei unterschiedlich großen Teilumfangsabschnitten kleiner oder gleich dem kleineren Teilumfangsabschnitt des Drehschiebergliedes eines jeden Umfangsabschnitts ist. Durch diese Merkmale ist sichergestellt, dass der Durchmesser des ersten Einlasses am Gehäuse nicht größer als jeder Teilumfangsabschnitt von jedem Umfangsabschnitt ist. Dadurch kann die dritte Drehschieberöffnung in jedem Umfangsabschnitt vollständig verschlossen werden.

In einer bevorzugten Ausgestaltung der Erfindung sind die erste Drehschieberöffnung und/oder die zweite Drehschieberöffnung als Schlitze ausgeformt. Ein Schlitz im Sinne der vorliegenden Erfindung ist eine Ausformung der Öffnung, bei welcher die Länge in Umfangsrichtung ein Vielfaches der mittleren Breite der Öffnung ist. Ein Schlitz hat den Vorteil, dass dieser sich über einen größeren Winkelbereich durchgängig erstrecken kann, und dass der Öffnungsquerschnitt kontinuierlich vergrößert oder verkleinert werden kann.

In einer weiteren bevorzugten Ausgestaltung der Erfindung weisen die Schlitze in den verschiedenen Umfangsabschnitten eine unterschiedliche Breite auf. Dadurch ist eine Temperatur des Motorblockes und des Zylinderkopfes über die Kühlmittelmenge regelbar.

Die dritte Drehschieberöffnung ist vorzugsweise als Kreisöffnung ausgeformt ist. Eine Kreisöffnung hat den Vorteil, dass sie einfach in das Drehschieberglied einbringbar ist. Eine Kreisöffnung ist zudem besonders gut auf die bereits kreisrunde Einlassöffnung abzustimmen.

Vorzugsweise ist ein Gesamtquerschnitt der den Auslässen zugeordneten Drehschieberöffnung des Drehschieberventils über einen Bereich von 315° gleich, wobei in Abschnitten zwischen den Umfangsabschnitten der Öffnungsquerschnitt der ersten Drehschieberöffnung in gleichem Maße sich verkleinert, wie der Öffnungsquerschnitt der zweiten Drehschieberöffnung sich vergrößert. Der Gesamtquerschnitt der den Auslässen zugeordneten Drehschieberöffnungen bleibt somit bis auf die Stellung, bei welcher die Drehschieberöffnungen geschlossen sind, konstant. Dadurch ist bei gleichbleibendem Volumenstrom eine Temperatur Regelung möglich.

In einer weiterführenden bevorzugten Ausgestaltung der Erfindung sind über einen Umfang des Drehschiebergliedes drei dritte Drehschieberöffnungen angeordnet. Dadurch kann eine Regelung der Kühlung des Motorblockes in drei verschiedenen Regelungsstufen für den Kühlerkreislauf und den Bypasskreislauf vorgenommen werden.

In einer weiteren bevorzugten Ausführungsform der Erfindung ist der zweite Einlass permanent offen. Da eine Regelung des Zylinderkopfes über die Auslässe vorgenommen wird, kann auf eine Regelung des zweiten Einlasses verzichtet werden. Dadurch ist das Drehschieberventil einfacher und wirtschaftlicher herstellbar.

Vorzugsweise ist der zweite Einlass an einem axialen Ende des Gehäuses ausgebildet. Dadurch kann das Drehschieberventil sehr kompakt gebaut werden.

In einer bevorzugten Ausgestaltung sind der erste Auslass, der zweite Auslass und der erste Einlass in radiale Richtung weisend an dem Gehäuse angeordnet. Dadurch sind der erste Auslass, der zweite Auslass und der erste Einlass in einer sich ergebenden Ausströmrichtung des Kühlmittels angeordnet, so dass ein Strömungswiderstand der Auslässe und des ersten Einlasses minimiert wird.

Das Drehschieberventil weist vorzugsweise eine Stellung des Drehschiebergliedes auf, bei welchem der erste Einlass und die Auslässe geschlossen sind. In dieser Stellung des Drehschiebergliedes fließt kein Kühlmittel zum Zylinderkopf oder zum Motorblock. Dadurch kann während einer Kaltstartphase der Zylinderkopf und der Motorblock schneller aufgeheizt werden.

Vorzugsweise erstreckt sich die erste Drehschieberöffnung über einen Winkelbereich von 270° und die zweite Drehschieberöffnung über einen Winkelbereich von 225°. Der gesamte zur Verfügung stehende Winkelbereich wird somit zur Verstellung des Drehschiebergliedes genutzt. Dadurch kann ein maximaler Durchströmquerschnitt bei einem trotz alledem kleinem Drehschieberglied realisiert werden.

Der erfindungsgemäße Kühlmittelkreislauf einer Verbrennungskraftmaschine mit einem Drehschieberventil hat somit den Vorteil, dass der Kühlmittelströmung des Motorblockes unabhängig regelbar ist, und somit die Temperatur des Motorblocks über eine Regelung des Kühlerkreislaufes, des Bypasskreislaufes und einer Regelung der Kühlmittelrückflussmenge aus dem Motorblock sehr gut einstellbar ist. Dadurch kann z.B. der Motorblock nach einem Kaltstart viel schneller aufgeheizt werden.

Weitere Einzelheiten und Vorteile der vorliegenden Erfindung ergeben sich aus der nachfolgenden Beschreibung der Ausführungsbeispiele in Verbindung mit den Zeichnungen. In diesen zeigen:
- Figur 1:: Blockdiagramm eines von dem erfindungsgemäßen Drehschieberventil zu regelnden Kühlmittelkreislaufes,
- Figur 2:: Perspektivische Ansicht eines erfindungsgemäßen Drehschieberventils mit teilweise aufgeschnittenem Gehäuse, und
- Figur 3:: Schematische Darstellung der Regelstrategie des Drehschieberventils.

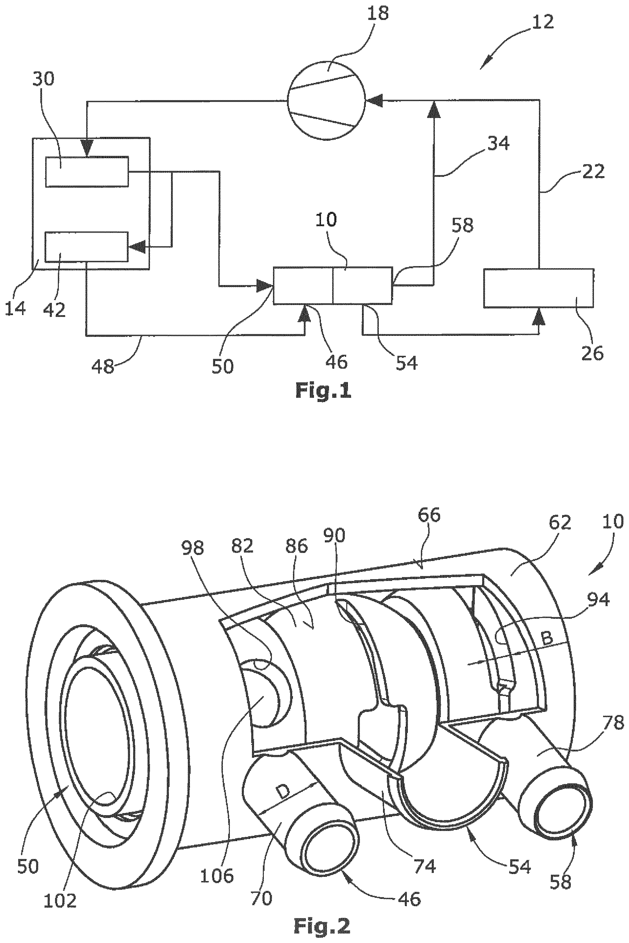

Figur 1 zeigt ein Blockdiagramm eines von einem Drehschieberventil 10 zu regelnden Kühlmittelkreislaufes 12 einer Verbrennungskraftmaschine 14. Der Kreislauf wird von einem Kühlmittel durchflossen, welches unter der Einwirkung einer Pumpe 18 zwischen Drehschieberventil 10 und Verbrennungskraftmaschine 14 zirkuliert. Der Kühlmittelkreislauf besteht aus einem Kühlerkreislauf 22, bei welchem das Kühlmittel nach Durchströmen eines Kühlers 26, einem Kühlmittelmantel eines Zylinderkopfes 30 der Verbrennungskraftmaschine 14 oder zusätzlich einem Kühlmittelmantel eines Motorblockes 42 zugeführt wird und einem Bypasskreislauf 34, bei welchem der Kühler 26 umgangen wird.

Das Drehschieberventil 10 weist einen ersten Einlass 46 auf, welcher fluidisch über eine Leitung 48 mit dem Kühlmittelmantel des Motorblockes 42 verbunden ist. Ein zweiter Einlass 50 des Drehschieberventils 10 ist fluidisch mit dem Kühlmittelmantel des Zylinderkopfes 30 verbunden. Ein erster Auslass 54 und ein zweiter Auslass 58 des Drehschieberventils 10 ist mit dem Kühlerkreislauf 22 bzw. dem Bypasskreislauf 34 verbunden. Der erste Einlass 46, der erste Auslass 54 und der zweite Auslass 58 sind durch das Drehschieberventil 10 vollständig zu öffnen oder zu schließen. Dadurch ist eine Durchströmung des Kühlerkreislaufs 22, des Bypasskreislaufs 34 und die Verbindung der Kreisläufe 22, 34 mit dem Motorblock 42 durch das Drehschieberventil 10 regelbar.

Figur 2 zeigt das Drehschieberventil 10 mit teilweise aufgeschnittenem Gehäuse 62. Das Drehschieberventil 10 weist ein zylindrisches Gehäuse 62 auf, welches auf einer äußeren Umfangsfläche 66 einen Einlassstutzen 70 für den ersten Einlass 46, einen ersten Auslassstutzen 74 für den ersten Auslass 54 und einen zweiten Auslassstutzen 78 für den zweiten Auslass 58 aufweist, die in radialer Richtung von der Umfangsfläche 66 abragen.

In dem Gehäuse 62 ist ein Drehschieberglied 82 drehbar angeordnet. Der Einlassstutzen 70 und die Auslassstutzen 74, 78 weisen nicht gezeigte Dichtelemente auf, welche dichtend an einer Außenumfangsfläche 86 des Drehschiebergliedes 10 anliegen. Das Drehschieberglied 82 weist in der Außenumfangsfläche 86 eine erste Drehschieberöffnung 90 für den ersten Auslass 54, eine dazu axial versetzte zweite Drehschieberöffnung 94 für den zweiten Auslass 58, und drei, dazu axial versetzte, über den Umfang verteilte, dritte Drehschieberöffnungen 98 für den ersten Einlass 46 auf. An einem axialen Ende des Drehschiebergliedes 10 ist eine axiale vierte Drehschieberöffnung 102, welche den zweiten Einlass 50 bildet, angeordnet.

Die erste und zweite Drehschieberöffnung 90, 94 sind als Schlitze ausgebildet, welcher sich über einen großen Bereich des Umfangs erstreckt. Eine Breite B der Schlitze ändert sich stufenweise über den Umfang. Die dritten Drehschieberöffnungen 98 sind als Kreisöffnungen ausgebildet.

Durch Drehen des Drehschiebergliedes 82 können die radialen Drehschieberöffnungen 90, 94, 98 in Überdeckung mit entsprechenden Öffnungen des Einlassstutzens 70 bzw. der Auslassstutzen 74, 78 gebracht werden, so dass eine fluidische Verbindung zwischen dem Einlassstutzen 70 bzw. den Auslassstutzen 74, 78 und einem Innenraum 106 des Drehschiebergliedes 82 hergestellt ist.

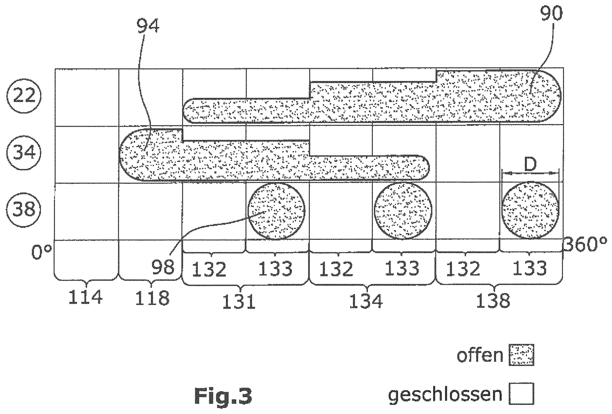

Figur 3 zeigt eine schematische Darstellung der Regelstrategie des Drehschieberventils 10. Die Darstellung zeigt den abgerollten Umfang des Drehschiebergliedes 82 mit der ersten Drehschieberöffnung 90 für den ersten Auslass 54 zur Regelung des Kühlerkreislaufes 22, der zweiten Drehschieberöffnung 94 für den zweiten Auslass 58 zur Regelung des Bypasskreislaufes 34, und den dritten Drehschieberöffnungen 98 für die Verbindung des Motorblockes 42 mit dem Kühlerkreislauf 22 oder dem Bypasskreislauf 34.

An der Abszisse ist der Gesamtumfang des Drehschiebergliedes 82 von 0° bis 360° abgerollt aufgetragen, welcher in fünf Umfangsabschnitte 114, 118, 131, 134, 138 unterteilt ist. In einem ersten Umfangsabschnitt 114, welcher sich über einen Winkel von 0° und 45° erstreckt, sind alle radialen Drehschieberöffnungen 90, 94, 98 geschlossen, so dass keine Kühlmittelströmung vorhanden ist. Insbesondere bei einem Kaltstart kann in einer solchen Stellung des Drehschiebergliedes 82 eine schnelle Aufheizung des Motorblockes 42 erreicht werden. Da sich der Zylinderkopf 30, verglichen mit dem Motorblock 42, schneller aufheizt, muss der Zylinderkopf 30 bereits vor dem Motorblock 42 gekühlt werden. Diese Kühlung wird in einem zweiten Umfangsabschnitt 118, der sich ebenfalls über 45° erstreckt, durch Öffnen des zweiten Auslasses 58 für den Bypasskreislauf 34 erzielt. Dabei wird der gesamte Kühlmittelstrom direkt dem Kühlmittelmantel des Zylinderkopfes 30 zugeleitet, welcher mit dem permanent offenen zweiten Einlass 50 des Drehschieberventils 10 verbunden ist.

Die drei weiteren Umfangsabschnitte 131, 134, 138 erstrecken sich jeweils über 90° und sind jeweils in zwei Teilumfangsabschnitte 132, 133 unterteilt. In einem dritten Umfangsabschnitt 131, welcher in einen ersten und einen zweiten Teilumfangsabschnitt 132, 133 unterteilt ist, wird zusätzlich zu dem zweiten Auslass 58 auch der erste Auslass 54 für den Kühlerkreislauf 22 geöffnet. Vom zweiten Umfangsabschnitt 118 zum dritten Umfangsabschnitt 131 ist ein Öffnungsquerschnitt der zweiten Drehschieberöffnung 94 in gleichem Maße verkleinert, wie der Öffnungsquerschnitt der ersten Drehschieberöffnung 90 sich vergrößert. Im dritten Umfangsabschnitt 131 wird somit ein Teil des gesamten Kühlmittelstroms vor einer Weiterleitung zum Kühlmittelmantel des Zylinderkopfes 30 zum Kühler 26 geleitet. In dem dritten Umfangsabschnitt 131 bleibt der Öffnungsquerschnitt der ersten Drehschieberöffnung 90 und der Öffnungsquerschnitt der zweiten Drehschieberöffnung 94 konstant. In dem zweiten Teilumfangsabschnitt 133 des dritten Umfangsabschnitts 131 wird zusätzlich zu der ersten und zweiten Drehschieberöffnung 90, 94 auch die dritte Drehschieberöffnung 98 des ersten Einlasses 46 geöffnet, welcher über die Leitung 48 mit dem Kühlmittelmantel des Motorblockes 42 fluidisch verbunden ist. Ein Teil das den Kühlmittelmantel des Zylinderkopfes 30 verlassenden Kühlmittels wird dadurch statt dem zweiten Einlass 50 des Drehschieberventils 10, dem Kühlmittelmantel des Motorblockes 42 zugeleitet.

An den ersten Umfangsabschnitt 131 schließt sich ein vierter und ein fünfter Umfangsabschnitt 134, 138 an, welche jeweils in einen ersten und einen zweiten Teilumfangsabschnitt 132, 133 unterteilt sind. In dem zweiten und dritten Umfangsabschnitt 134, 138 verkleinert sich ein Öffnungsquerschnitt der zweiten Drehschieberöffnung 94 jeweils in gleichem Maße, wie der Öffnungsquerschnitt der ersten Drehschieberöffnung 90 sich vergrößert. Da ein Durchmesser D des ersten Einlasses 46 am Gehäuse 62 kleiner oder gleich dem kleineren Teilumfangsabschnitt 133 des Drehschiebergliedes 82 eines jeden Umfangsabschnittes 131, 134, 138 ist, ist es in jedem Umfangsabschnitt 131, 134, 138 möglich, die dritte Drehschieberöffnung 98 komplett zu verschließen.

Das Drehschieberventil hat somit den Vorteil, dass während eines Kaltstartes der Motorblock durch den reduzierten Kühlmittelstrom und die Umgehung des Kühlers schneller aufgeheizt wird. In einem Volllastzustand, bei welchem eine hohe thermische Last vorliegt, wird der Motorblock durch Zuführen einer großen Menge an Kühlmittel, welches zusätzlich über einen Kühler geleitet wird, effektiv gekühlt.

Das erfindungsgemäße Drehschieberventil ist nicht auf das beschriebene Drehschieberventil begrenzt. So kann sich die Anzahl der Umfangsabschnitte von dem beschriebenen Ausführungsbeispiel unterscheiden.

### Bezugszeichenliste

- 10: Drehschieberventil
- 12: Kühlmittelkreislauf
- 14: Verbrennungskraftmaschine
- 18: Pumpe
- 22: Kühlerkreislauf
- 26: Kühler
- 30: Zylinderkopf
- 34: Bypasskreislauf
- 42: Motorblock
- 46: erster Einlass
- 48: Leitung
- 50: zweiter Einlass
- 54: erster Auslass
- 58: zweiter Auslass
- 62: Gehäuse
- 66: Umfangsfläche
- 70: Einlassstutzen
- 74: erster Auslassstutzen
- 78: zweiter Auslassstutzen
- 82: Drehschieberglied
- 86: Außenumfangsfläche
- 90: erste Drehschieberöffnung
- 94: zweite Drehschieberöffnung
- 98: dritte Drehschieberöffnung
- 102: vierte Drehschieberöffnung
- 106: Innenraum
- 114: erster Umfangsabschnitt
- 118: zweiter Umfangsabschnitt
- 131: dritter Umfangsabschnitt
- 132: erster Teilumfangsabschnitt
- 133: zweiter Teilumfangsabschnitt
- 134: vierter Umfangsabschnitt
- 138: fünfter Umfangsabschnitt
- B: Breite
- D: Durchmesser

## Patentansprüche

1. Kühlmittelkreislauf (12) einer Verbrennungskraftmaschine (14) mit einem Drehschieberventil (10), welches umfasst:
- ein Gehäuse (62), mit:
- einem ersten Einlass (46), welcher fluidisch mit einem Kühlmittelmantel des Motorblockes (42) der Verbrennungskraftmaschine (14) verbindbar ist,
- einem zweiten Einlass (50), welcher fluidisch mit einem Kühlmittelmantel des Zylinderkopfes (30) der Verbrennungskraftmaschine (14) verbindbar ist,
- einem ersten Auslass (54), welcher fluidisch mit einem Kühlerkreislauf (22) verbindbar ist, und
- einem zweiten Auslass (58), welcher fluidisch mit einem Bypasskreislauf (34) verbindbar ist,
- ein Drehschieberglied (82), welches wenigstens vier Drehschieberöffnungen (90, 94, 98, 102) aufweist, wobei eine Durchflussmenge des Kühlmittels des ersten Einlasses (46), des ersten Auslasses (54) und des zweiten Auslasses (58) durch Drehen des Drehschiebergliedes (82) regelbar sind,
**dadurch gekennzeichnet, dass**
das Drehschieberglied (82) wenigstens zwei Umfangsabschnitte (131, 134, 138), die jeweils in zwei Teilumfangsabschnitte (132, 133) unterteilt sind, aufweist, wobei in jedem dieser Umfangsabschnitte (131, 134, 138) ein Öffnungsquerschnitt einer ersten Drehschieberöffnung (90) für den ersten Auslass (54) und ein dazu axial versetzter Öffnungsquerschnitt einer zweiten Drehschieberöffnung (94) für den zweiten Auslass (58) über die zwei Teilumfangsabschnitte (132, 133) gleich ist, und wobei in jeweils einem der Teilumfangsabschnitte (133) jedes dieser Umfangsabschnitte (131, 134, 138) eine zu der ersten und der zweiten Drehschieberöffnung (90, 94) axial versetzte dritte Drehschieberöffnung (98) für den ersten Einlass (46) angeordnet ist, während der jeweils andere dem ersten Einlass (46) zugeordnet Teilumfangsabschnitt (132) des Drehschiebergliedes (82) geschlossen ist.

2. Kühlmittelkreislauf (12) einer Verbrennungskraftmaschine (14) mit einem Drehschieberventil (10) nach Anspruch 1, **dadurch gekennzeichnet, dass** die Teilumfangsabschnitte (132, 133) gleich oder unterschiedlich groß sind, wobei ein Durchmesser (D) des ersten Einlasses (46) am Gehäuse (62) bei gleich großen Teilumfangsabschnitten (132, 133) kleiner oder gleich dem Teilumfangsabschnitt (132, 133) ist, und wobei der Durchmesser (D) bei unterschiedlich großen Teilumfangsabschnitten (132, 133) kleiner oder gleich dem kleineren Teilumfangsabschnitt (133) des Drehschiebergliedes (82) eines jeden Umfangsabschnitts (131, 134, 138) ist.

3. Kühlmittelkreislauf (12) einer Verbrennungskraftmaschine (14) mit einem Drehschieberventil (10) nach Anspruch 1 oder 2, **dadurch gekennzeichnet, dass** die erste Drehschieberöffnung (90) und/oder die zweite Drehschieberöffnung (94) als Schlitze ausgeformt sind.

4. Kühlmittelkreislauf (12) einer Verbrennungsmaschine (14) mit einem Drehschieberventil (10) nach Anspruch 3, **dadurch gekennzeichnet, dass** die Schlitze in den verschiedenen Umfangsabschnitten (131, 134, 138) eine unterschiedliche Breite (B) aufweisen.

5. Kühlmittelkreislauf (12) einer Verbrennungskraftmaschine (14) mit einem Drehschieberventil (10) nach einem der vorherigen Ansprüche, **dadurch gekennzeichnet, dass** die dritte Drehschieberöffnung (98) als Kreisöffnung ausgeformt ist.

6. Kühlmittelkreislauf (12) einer Verbrennungskraftmaschine (14) mit einem Drehschieberventil (10) nach einem der vorherigen Ansprüche, **dadurch gekennzeichnet, dass** ein Gesamtquerschnitt der den Auslässen (54, 58) zugeordneten Drehschieberöffnungen (90, 94) des Drehschieberventils (10) über einen Bereich von 315° gleich ist, wobei in Abschnitten zwischen den Umfangsabschnitten (131, 134, 138) der Öffnungsquerschnitt der zweiten Drehschieberöffnung (94) in gleichem Maße sich verkleinert, wie der Öffnungsquerschnitt der ersten Drehschieberöffnung (90) sich vergrößert.

7. Kühlmittelkreislauf (12) einer Verbrennungskraftmaschine (14) mit einem Drehschieberventil (10) nach einem der vorherigen Ansprüche, **dadurch gekennzeichnet, dass** über einen Umfang des Drehschiebergliedes (82) drei dritte Drehschieberöffnungen (98) angeordnet sind.

8. Kühlmittelkreislauf (12) einer Verbrennungskraftmaschine (14) mit einem Drehschieberventil (10) nach einem der vorherigen Ansprüche, **dadurch gekennzeichnet, dass** der zweite Einlass (50) permanent offen ist.

9. Kühlmittelkreislauf (12) einer Verbrennungskraftmaschine (14) mit einem Drehschieberventil (10) nach einem der vorherigen Ansprüche, **dadurch gekennzeichnet, dass** der zweite Einlass (50) an einem axialen Ende des Gehäuses (62) ausgebildet ist.

10. Kühlmittelkreislauf (12) einer Verbrennungskraftmaschine (14) mit einem Drehschieberventil (10) nach einem der vorherigen Ansprüche, **dadurch gekennzeichnet, dass** der erste Auslass (54), der zweite Auslass (58) und der erste Einlass (46) in radiale Richtung weisend an dem Gehäuse (62) angeordnet sind.

11. Kühlmittelkreislauf (12) einer Verbrennungskraftmaschine (14) mit einem Drehschieberventil (10) nach einem der vorherigen Ansprüche, **dadurch gekennzeichnet, dass** das Drehschieberventil (10) eine Stellung des Drehschiebergliedes (82) aufweist, bei welchem der erste Einlass (46) und die Auslässe (54, 58) geschlossen sind.

12. Kühlmittelkreislauf (12) einer Verbrennungskraftmaschine (14) mit einem Drehschieberventil (10) nach einem der vorherigen Ansprüche, **dadurch gekennzeichnet, dass** die erste Drehschieberöffnung (90) sich über einen Winkelbereich von 270° und die zweite Drehschieberöffnung (94) sich über einen Winkelbereich von 225° erstreckt.

## Claims

1. Coolant circuit (12) of an internal combustion engine (14) with a rotary slide valve (10), comprising:
- a housing (62) having:
- a first inlet (46) adapted to be fluidically connected to a coolant jacket of the engine block (42) of the internal combustion engine (14),
- a second inlet (50) adapted to be fluidically connected to a coolant jacket of the cylinder head (30) of the internal combustion engine (14),
- a first outlet (54) adapted to be fluidically connected to a radiator circuit (22), and
- a second outlet (58) adapted to be fluidically connected to a bypass circuit (34),
- a rotary slide member (82) which has at least four rotary slide openings (90, 94, 98, 102), wherein a flow rate of the coolant of the first inlet (46), the first outlet (54) and the second outlet (58) are adapted to be regulated by turning the rotary slide member (82),
**characterized in that**
the rotary slide member (82) has at least two circumferential sections (131, 134, 138), each divided into two partial circumferential sections (132, 133), wherein in each of these circumferential sections (131, 134, 138), an opening cross section of a first rotary slide opening (90) for the first outlet (54) and an opening cross section, axially offset therefrom, of a second rotary slide opening (94) for the second outlet (58) are equal over the two partial circumferential sections (132, 133), and wherein in a respective one of the partial circumferential sections (133) of each of these circumferential sections (131, 134, 138) a third rotary slide opening (98) - axially offset from the first and the second rotary slide openings (90, 94) - for the first inlet (46) is arranged, while the respective other partial circumferential section (132) of the rotary slide member (82), which is associated to the first inlet (46), is closed.

2. Coolant circuit (12) of an internal combustion engine (14) with a rotary slide valve (10) of claim 1, **characterized in that** the partial circumferential sections (132, 133) are equal or different in size, wherein a diameter (D) of the first inlet (46) at the housing (62) is smaller or equal to the partial circumferential section (132, 133), if the partial circumferential sections (132, 133) are equal in size, and wherein the diameter (D) is smaller or equal to the smaller partial cross section (133) of the rotary slide member (82) of each circumferential section (131, 134, 138), if the partial circumferential sections (132, 133) differ in size.

3. Coolant circuit (12) of an internal combustion engine (14) with a rotary slide valve (10) of one of claims 1 or 2, **characterized in that** the first rotary slide opening (90) and/or the second rotary slide opening (94) are formed as slits.

4. Coolant circuit (12) of an internal combustion engine (14) with a rotary slide valve (10) of claim 3, **characterized in that** the slits in the different circumferential sections (131, 134, 138) differ in width (B).

5. Coolant circuit (12) of an internal combustion engine (14) with a rotary slide valve (10) of one of the preceding claims, **characterized in that** the third rotary slide opening (98) is formed as a circular opening.

6. Coolant circuit (12) of an internal combustion engine (14) with a rotary slide valve (10) of one of the preceding claims, **characterized in that** an overall cross section of the rotary slide openings (90, 94) of the rotary slide vane (10), which are associated to the outlets (54, 58), is identical through a range of 315°, wherein, in sections between the circumferential sections (131, 134, 138), the opening cross section of the second rotary slide opening (94) decreases to the same extent that the opening cross section of the first rotary slide opening (90) increases.

7. Coolant circuit (12) of an internal combustion engine (14) with a rotary slide valve (10) of one of the preceding claims, **characterized in that** three third rotary slide openings (98) are provided along a circumference of the rotary slide member (82).

8. Coolant circuit (12) of an internal combustion engine (14) with a rotary slide valve (10) of one of the preceding claims, **characterized in that** the second inlet (50) is permanently open.

9. Coolant circuit (12) of an internal combustion engine (14) with a rotary slide valve (10) of one of the preceding claims, **characterized in that** the second inlet (50) at an axial end of the housing (62).

10. Coolant circuit (12) of an internal combustion engine (14) with a rotary slide valve (10) of one of the preceding claims, **characterized in that** the first outlet (54), the second outlet (58) and the first inlet (46) are arranged on the housing (62) directed in the radial direction.

11. Coolant circuit (12) of an internal combustion engine (14) with a rotary slide valve (10) of one of the preceding claims, **characterized in that** the rotary slide valve (10) comprises a position of the rotary slide member (82) in which the first inlet (46) and the outlets 54, 58) are closed.

12. Coolant circuit (12) of an internal combustion engine (14) with a rotary slide valve (10) of one of the preceding claims, **characterized in that** the first rotary slide opening (90) extends over an angular range of 270° and the second rotary slide opening (94) extends over an angular range of 225°.

## Revendications

1. Circuit de refroidissement (12) d'un moteur à combustion interne (14) avec une valve à tiroir rotatif (10), le circuit comprenant:
- un boitier (62) avec:
- une première entrée (46) pouvant être reliée fluidiquement avec une enveloppe de refroidissement du bloc-moteur (42) du moteur à combustion interne (14),
- une deuxième entrée (50) pouvant être reliée fluidiquement avec une enveloppe de refroidissement de la culasse (30) du moteur à combustion interne (14),
- une première sortie (54) pouvant être reliée fluidiquement avec un circuit refroidisseur (22), et
- une deuxième sortie (58) pouvant être reliée fluidiquement avec un circuit de dérivation (34),
- un élément à tiroir rotatif (82) comprenant au moins quatre ouvertures du tiroir rotatif (90, 94, 98, 102), le débit du liquide de refroidissement de la première entrée (46), de la première sortie (54) et de la deuxième sortie (58) pouvant être réglé par rotation dudit élément à tiroir rotatif (82),
**caractérisé en ce que**
ledit élément à tiroir rotatif (82) comprend au moins deux sections circonférentielles (131, 134, 138), chacune divisée en deux sections circonférentielles partielles (132, 133), où, dans chacune de ces sections circonférentielles (131, 134, 138), une section d'ouverture d'une première ouverture du tiroir rotatif (90) pour la première sortie (54) et une section d'ouverture d'une deuxième ouverture du tiroir rotatif (94) pour la deuxième sortie (58), section décalée axialement par rapport à la section susmentionnée, sont identique le long des deux sections circonférentielles partielles (132, 133), et où, dans une des sections circonférentielles partielles (133) respective de chacune des sections circonférentielles (131, 134, 138), une troisième ouverture du tiroir rotatif (98) pour la première entrée (46) est disposée, ouverture décalée axialement par rapport à la première et la deuxième ouverture du tiroir rotatif (90, 94), tandis que l'autre section circonférentielle partielle (132) respective dudit élément à tiroir rotatif (82), associée à la première sortie (46), est fermée.

2. Circuit de refroidissement (12) d'un moteur à combustion interne (14) avec une valve à tiroir rotatif (10) selon la revendication 1, **caractérisé en ce que** lesdites sections circonférentielles partielles (132, 133) ont des dimensions identiques ou différentes, où le diamètre (D) de la première entrée (46) au boitier (62) est inférieur ou égal à la section circonférentielle partielle (132, 133), si les sections circonférentielles partielles (132, 133) ont des dimensions identiques, et où le diamètre (D) est inférieur ou égal à la section circonférentielle partielle (133) dudit élément à tiroir rotatif (82) de chacune des sections circonférentielles (131, 134, 138), si les sections circonférentielles partielles (132, 133) ont des dimensions différentes.

3. Circuit de refroidissement (12) d'un moteur à combustion interne (14) avec une valve à tiroir rotatif (10) selon la revendication 1 ou 2, **caractérisé en ce que** première ouverture du tiroir rotatif (90) et/ou la deuxième ouverture du tiroir rotatif (94) sont réalisées sous forme de fentes.

4. Circuit de refroidissement (12) d'un moteur à combustion interne (14) avec une valve à tiroir rotatif (10) selon la revendication 3, **caractérisé en ce que** les fentes ont une largeur différente dans les sections circonférentielles (131, 134, 138) différentes.

5. Circuit de refroidissement (12) d'un moteur à combustion interne (14) avec une valve à tiroir rotatif (10) selon l'une quelconque des revendications précédentes, **caractérisé en ce que** la troisième ouverture du tiroir rotatif (98) est réalisée sous forme d'une ouverture circulaire.

6. Circuit de refroidissement (12) d'un moteur à combustion interne (14) avec une valve à tiroir rotatif (10) selon l'une quelconque des revendications précédentes, **caractérisé en ce qu'**une section transversale totale des ouvertures du tiroir rotatif (90, 94) de la valve à tiroir rotatif (10), associées aux sorties (54, 58), est égale sur une plage de 315°, où, dans des sections entre les sections circonférentielles (131, 134, 138), la section d'ouverture de la deuxième ouverture du tiroir rotatif (94) décroît dans la même mesure que la section d'ouverture de la première ouverture du tiroir rotatif (90) s'accroît.

7. Circuit de refroidissement (12) d'un moteur à combustion interne (14) avec une valve à tiroir rotatif (10) selon l'une quelconque des revendications précédentes, **caractérisé en ce que** trois troisièmes ouvertures du tiroir rotatif (98) sont disposées le long de la circonférence dudit élément à tiroir rotatif (82).

8. Circuit de refroidissement (12) d'un moteur à combustion interne (14) avec une valve à tiroir rotatif (10) selon l'une quelconque des revendications précédentes, **caractérisé en ce que** la deuxième entrée (50) est ouverte en permanence.

9. Circuit de refroidissement (12) d'un moteur à combustion interne (14) avec une valve à tiroir rotatif (10) selon l'une quelconque des revendications précédentes, **caractérisé en ce que** la deuxième entrée (50) est formée sur une extrémité axiale du boiter (62).

10. Circuit de refroidissement (12) d'un moteur à combustion interne (14) avec une valve à tiroir rotatif (10) selon l'une quelconque des revendications précédentes, **caractérisé en ce que** la première sortie (54), la deuxième sortie (58) et la première entrée (46) sont disposées sur le boîtier (62) orientées dans la direction radiale.

11. Circuit de refroidissement (12) d'un moteur à combustion interne (14) avec une valve à tiroir rotatif (10) selon l'une quelconque des revendications précédentes, **caractérisé en ce que** la valve à tiroir rotatif (10) comprend une position dudit élément à tiroir rotatif (82), dans laquelle la première entrée (46) et les sorties (54, 58) sont fermées.

12. Circuit de refroidissement (12) d'un moteur à combustion interne (14) avec une valve à tiroir rotatif (10) selon l'une quelconque des revendications précédentes, **caractérisé en ce que** la première ouverture du tiroir rotatif (90) s'étend sur une plage angulaire de 270° et la deuxième ouverture du tiroir rotatif (94) s'étend sur une plage angulaire de 225°.
